# EUROPÄISCHE PATENTSCHRIFT

(11) **EP 0 852 665 B1**
(45) Veröffentlichungstag und Bekanntmachung des Hinweises auf die Patenterteilung: **28.11.2001**
(21) Anmeldenummer: 96931757.7
(22) Anmeldetag: 23.09.1996
(51) Int. Cl.: F02C 7/045

(54) **HALTERUNG FÜR SCHALLDÄMPFERKULISSEN**
MOUNTING FOR SOUND-ABSORBING MEMBERS
SYSTEME DE FIXATION POUR ELEMENTS D'ISOLATION PHONIQUE

(30) Priorität: 26.09.1995 DE 19535812
(43) Veröffentlichungstag der Anmeldung: 15.07.1998
(73) Patentinhaber: SIEMENS AKTIENGESELLSCHAFT, 80333 München (DE)
(72) Erfinder: BÄHR, Siegfried, D-91330 Eggolsheim (DE); LUDWIG, Ludwin, D-91350 Gremsdorf-Buch (DE)
(86) Internationale Anmeldenummer: DE9601802
(87) Internationale Veröffentlichungsnummer: WO9712134

(56) Entgegenhaltungen:
- FR-A- 2 514 085
- GB-A- 2 167 463
- US-A- 4 127 183
- US-A- 5 332 872

## Beschreibung

Die Erfindung bezieht sich auf eine Halterung für Schalldämpferkulissen einer Gasturbine in einem Gehäuse.

Im Luftansaugkanal einer Gasturbine sind üblicherweise in Strömungsrichtung der angesaugten Luft hinter einem Luftreinigungs- oder Staubfilter Schalldämpferkulissen vorgesehen, die innerhalb eines separaten Schalldämpfergehäuses angeordnet sind (siehe zum Beispiel das Dokument US-A-5 332 872.). Das Schalldämpfergehäuse ist etwa 11 m breit, 5 m hoch und 3 m tief und wird ebenso wie der Luftansaugkanal selbst vor Ort montiert. Dazu werden in dem aufgebauten Schalldämpfergehäuse die Kulissen in mehreren hintereinander aufgestellten Reihen angeordnet. Dabei werden zunächst in einer ersten Reihe eine Anzahl von Schalldämpferkulissen nebeneinander angeordnet und in der Art einer Steckverbindung jeweils mit einer ihrer beiden Stirnseiten an einer Gehäusewand positioniert. Anschließend werden die Schalldämpferkulissen dieser ersten Reihe mittels einer diesen gemeinsamen Profilleiste gehalten, indem an den gegenüberliegenden Stirnseiten der Schalldämpferkulissen vorgesehene Nasen in entsprechende Aussparungen der Profilleiste eingreifen. In diese Profilleiste werden die Stirnseiten von Schalldämpferkulissen einer zweiten Reihe eingesteckt, wobei die Schalldämpferkulissen dieser zweiten Reihe gegenüber den Schalldämpferkulissen der ersten Reihe versetzt angeordnet sind. Ein in analoger Weise auf der gegenüberliegenden Stirnseite der Schalldämpferkulissen der zweiten Reihe angeordnete Profilleiste hält die Schalldämpferkulissen der zweiten Reihe in Position.

Zum Fixieren der Profilleisten werden diese mit dem Boden des Schalldämpfergehäuses Vorort verschraubt und/oder verschweißt. Problematisch dabei ist jedoch, daß dazu während der Montage spanabhebende bzw. Schweißrückstände hinterlassende Arbeiten erforderlich sind, die zudem in Strömungsrichtung der angesaugten Luft hinter dem Staubfilter und damit im Reinluftgebiet des Luftansaugkanals durchzuführen sind. Derartige Verschmutzungen durch Späne bzw. Schweißspritzer müssen beseitigt werden, da derartige Verschmutzungen während des Betriebs der Gasturbine zu Beschädigungen, insbesondere an der Beschaufelung, führen können.

Beim Verschweißen der Profilstangen tritt darüber hinaus das Problem auf, daß ein werksseitig bereits vorgenommener, insbesondere zur Vermeidung von Korrosion vorgesehener, Schutzanstrich beschädigt wird. Die entsprechenden Stellen müssen daher Vorort ausgebessert werden, was jedoch regelmäßig zu einer verminderten Schutzwirkung an diesen Stellen führt.

Der Erfindung liegt daher die Aufgabe zugrunde, eine Halterung für Schalldämpferkulissen im Luftansaugkanal einer Gasturbine anzugeben, mit der unter Vermeidung der genannten Nachteile eine sichere Fixierung der Schalldämpferkulissen bei gleichzeitiger Vermeidung von Verschmutzungen während der Montage gewährleistet ist.

Diese Aufgabe wird bei einer Halterung für Schalldämpferkulissen einer Gasturbine in einem Gehäuse erfindungsgemäß gelöst, indem ein Riegelmechanismus zum Fixieren der Schalldämpferkulissen vorgesehen ist.

In vorteilhafter Ausgestaltung umfaßt der Regelmechanismus ein ortsfest im Gehäuse angeordnetes Führungsteil und einen mit diesem in Eingriff bringbaren Riegel. Die Halterung der Schalldämpferkulissen innerhalb einer Reihe erfolgt somit zweckmäßigerweise in zwei Arbeitsschritten, wobei zunächst die Schalldämpferkulissen dieser Reihe mittels des Führungsteils positioniert und anschließend mittels des Riegels fixiert werden.

Der Riegelmechanismus kann nach erfolgter Montage und Ausrichtung mittels Bolzen fixiert und arretiert werden. Vorzugsweise sind jedoch zur Befestigung des Riegelmechanismus mit dem Gehäuse verbundene Befestigungselemente vorgesehen, mit denen das Führungsteil und/oder der Riegel in Eingriff bringbar sind. Außerdem weist der Riegel vorzugsweise eine Anzahl von Befestigungsnasen auf, die beim Verriegeln in entsprechenden Ausklinkungen des Führungsteils einbringbar sind. Die Befestigungsnasen können auch am Führungsteil und die entsprechenden Ausklinkungen am Riegel vorgesehen sein.

Zur Aufnahme von Strukturelementen der Schalldämpferkulissen sind zweckmäßigerweise am Führungsteil und/oder am Riegel Aussparungen vorgesehen. Diese, beispielsweise in Form von Positionierungsnasen an den Schalldämpferkulissen vorgesehenen Strukturelemente werden bei der Montage der ersten Reihe von Schalldämpferkulissen mit den entsprechenden Aussparungen des Führungsteils in Eingriff gebracht. Beim Aufbau einer zweiten oder jeder weiteren Reihe von Schalldämpferkulissen dienen die Aussparungen im jeweiligen Riegel zur Aufnahme der entsprechenden Strukturelemente der Schalldämpferkulissen der zweiten bzw. jeder weiteren Reihe.

Das Führungsteil und der Riegel sind zweckmäßigerweise als U-Profil ausgebildet. Dadurch ergibt sich für den Riegelmechanismus in montiertem Zustand ein H-Profil, das in besonders einfacher Art und Weise mit bereits bei der Fertigung am Gehäuseboden befestigten Sicherungs- oder Fertigungsnocken in Eingriff bringbar ist.

Die mit der Erfindung erzielten Vorteile bestehen insbesondere darin, daß durch die Verwendung eines Riegelmechanismus zum Fixieren der Schalldämpferkulissen im Schalldämpfergehäuse bei der Montage keine Span- oder Schweißrückstände verursachenden Arbeiten erforderlich sind. Vielmehr können alle Verschmutzungen verursachenden und zeitaufwändigen Arbeiten, insbesondere das Anbringen von Befestigungselementen an Gehäuseteilen, werksseitig vorgenommen werden. Dadurch sind vorteilhafterweise die Montagezeit und der Montageaufwand besonders gering.

Ein Ausführungsbeispiel der Erfindung wird anhand einer Zeichnung näher erläutert. Darin zeigen:
- Figur 1: eine Draufsicht auf ein Schalldämpfergehäuse im Schnitt mit zwei Reihen von Schalldämpferkulissen,
- Figur 2: einen Ausschnitt II aus FIG 1 mit einem Riegelmechanismus in größerem Maßstab,
- Figur 3: den Riegelmechanismus gemäß FIG 2 im Querschnitt, und
- Figur 4: in Seitenansicht einen Ausschnitt IV aus FIG 2 in größerem Maßstab.

Einander entsprechende Teile sind in allen Figuren mit den gleichen Bezugszeichen versehen.

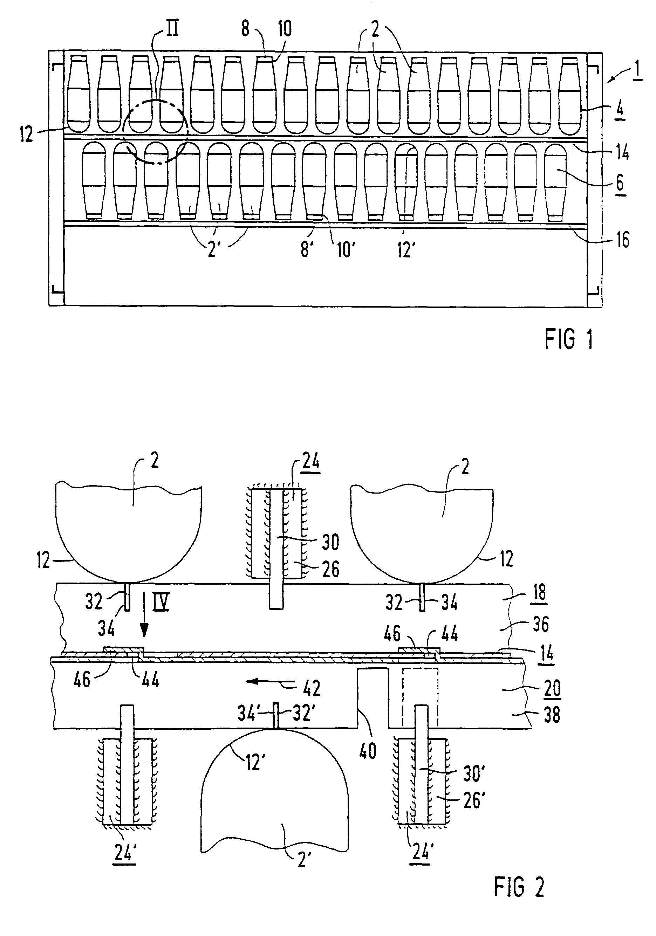

Das Schalldämpfergehäuse 1 gemäß Figur 1 ist Teil eines nicht näher dargestellten Luftansaugkanals einer Gasturbine. Im Schalldämpfergehäuse 1 sind eine Anzahl von Schalldämpferkulissen 2 und 2' in zwei Reihen 4 bzw. 6 angeordnet. Die Schalldämpferkulissen 2 der ersten Reihe 4 sind mit ihren abgeflachten Stirnseiten 8 in werksseitig im Gehäuse 1 befestigten zangenartigen Halteelementen 10, z.B. in Form von Führungsplatten, positioniert. Die gegenüberliegenden, abgerundeten Stirnseiten 12 der Schalldämpferkulissen 2 sind mittels eines Riegelmechanismus 14 im Gehäuse 1 positioniert und fixiert. Der Riegelmechanismus 14 dient gleichzeitig zur Positionierung der Schalldämpferkulissen 2' der zweiten Reihe 6. Die flachen Stirnseiten 8' der Schalldämpferkulissen 2' der zweiten Reihe 6 sind mittels eines weiteren Riegelelements 16 im Gehäuse 1 positioniert und fixiert.

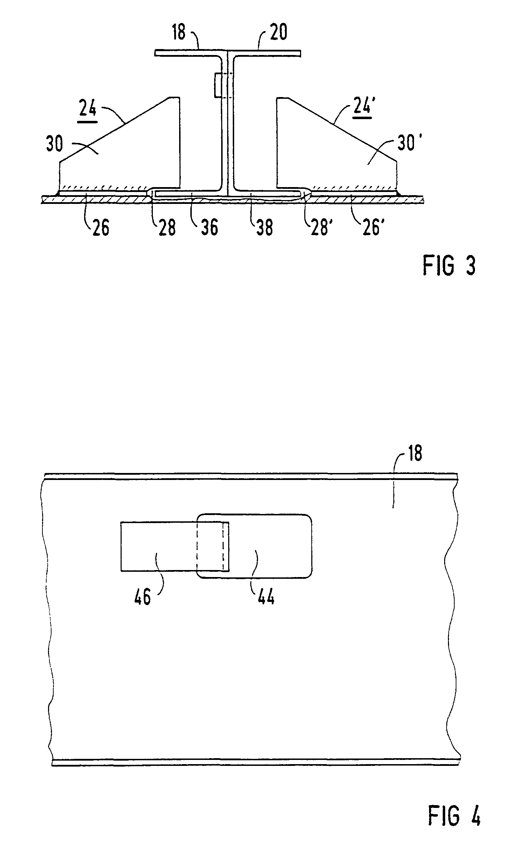

Der Riegelmechanismus 14 umfaßt gemäß den Figuren 2 und 3 ein Führungsteil 18 und einen Riegel 20 mit jeweils U-förmigem Profil. Das Führungsteil 18 und der Riegel 20 sind gegeneinander und gegenüber dem Gehäuse 1 verriegelt. Zur Verriegelung gegenüber dem Gehäuse 1 sind zwischen den Schalldämpferkulissen 2 der ersten Reihe 4 und zwischen den Schalldämpferkulissen 2' der zweiten Reihe 6 werksseitig am Boden 22 des Gehäuses 1 befestigte Führungs- oder Sicherungsnocken 24 bzw. 24' als Befestigungselemente vorgesehen.

Wie in Figur 3 gezeigt, umfassen die Sicherungsnocken 24 und 24' werksseitig aufgeschweißte Befestigungsplatten 26, 26' sowie unter Bildung von Spalten 28, 28' lediglich über einen Teil ihrer Länge werksseitig auf den Befestigungsplatten 26, 26' aufgeschweiste Befestigungsknacken 30 bzw. 30'. Die Befestigungsplatten 26, 26' sowie die Befestigungsknacken 30, 30' der Sicherungsnocken 24 bzw. 24' bestehen vorzugsweise aus Edelstahl.

Bei der Montage werden zunächst die Schalldämpferkulissen 2 der ersten Reihe 4 mit ihren abgeflachten Stirnseiten 8 in die entsprechenden Halteelemente 10 eingeschoben. Anschließend wird das zweckmäßigerweise allen Schalldämpferkulissen 2 der ersten Reihe 4 gemeinsame Führungsteil 18 des Riegelmechanismus 14 gegen die abgerundeten Stirnseiten 12 der Schalldämpferkulissen 2 geschoben. Zur Positionierung der einzelnen Schalldämpferkulissen 2 sind an deren Stirnseiten 12 Strukturelemente in Form von Positionierungsnasen 32 vorgesehen, die in entsprechende Ausklinkungen 34 im Führungsteil 18 eingreifen. Gleichzeitig wird das Führungsteil 18 mit seinem unteren Schenkel 36 in die unterhalb der Befestigungsknacken 30 der Sicherungsnocken 24 vorgesehenen Spalte 28 geschoben. Somit sind die Schalldämpferkulissen 2 der ersten Reihe 4 in ihrer Lage positioniert. Sie sind außerdem gegen eine seitliche Verschiebung gesichert, wenn sich das Führungsteil 18 - wie aus Figur 1 ersichtlich - über die gesamte Breite des Gehäuses 1 erstreckt und somit an dessen Seitenwänden anstößt.

Anschließend wird der Riegel 20 montiert. Dazu wird der Riegel 20 zunächst derart positioniert, daß im unteren Schenkel 38 seines U-förmigen Profils vorgesehene Ausklinkungen 40 gegenüber den Sicherungsnocken 24' angeordnet sind, wie dies die gestrichelt dargestellte Position der Ausklinkungen 40 in Figur 2 zeigt. Danach wird der Riegel 20 in Richtung des Pfeils 42 verschoben, so daß die Ausklinkungen 40 neben den Sicherungsnocken 24 liegen und der untere Schenkel 38 des U-förmigen Riegels 20 unter den Befestigungsknacken 30' in den Schlitzen 28' positioniert ist.

Zur Sicherung des Führungsteils 18 und des Riegels 20 des Riegelmechanismus 14 gegeneinander weist das Führungsteil 18 Ausklinkungen 44 zur Aufnahme von am Riegel 20 vorgesehenen Befestigungsnasen 46 auf. Dies ist in Figur 4 für den verriegelten Zustand dargestellt.

Nach erfolgter Verriegelung des Riegels 20 gegenüber dem Führungsteil 18 sind die Schalldämpferkulissen 2 der ersten Reihe 4 in ihrer Lage fixiert. Die Montage der Schalldämpferkulissen 2' der zweiten Reihe 6 erfolgt analog zur Montage der Schalldämpferkulissen 2 der ersten Reihe 4. Dabei werden zunächst die wiederum an den abgerundeten Stirnseiten 12' der Schalldämpferkullissen 2' vorgesehenen Strukturelemente 32' in entsprechende Ausklinkungen 34' des Riegels 20 eingeführt. Die somit positionierten Schalldämpferkulissen 2' der zweiten Reihe 6 werden anschließend mittels des Riegelelementes 16 in analoger Weise verriegelt. Dabei können anstelle von Ausklinkungen auch Führungsplatten 10' (Figur 1) zur Aufnahme der abgeflachten Stirnseiten 8' der Schalldämpferkulissen 2' an einem entsprechenden Führungsteil angebracht sein.

Die Halterung der Schalldämpferkulissen 2, 2' mittels des Riegelmechanismus 14 bzw. 16 hat insbesondere den Vorteil, daß unter Vermeidung von Verschmutzungen verursachenden Arbeiten die Schalldämpferkulissen 2, 2' Vorort schnell und mit geringem Aufwand montiert werden können. Außerdem ist eine Entriegelung des Riegelmechanismus 14, 16 in einfacher Weise möglich, so daß einzelne oder alle Schalldämpferkulissen 2, 2' in besonders einfacher Weise, z.B. zum Zwecke eines Austausches, demontiert werden können.

## Patentansprüche

1. Halterung für Schalldämpferkulissen einer Gasturbine in einem Gehäuse (1), wobei ein Riegelmechanismus (14) zum Fixieren der Schalldämpferkulissen (2, 2') vorgesehen ist.

2. Halterung nach Anspruch 1,
**dadurch gekennzeichnet, daß** der Riegelmechanismus (14) ein ortsfest im Gehäuse (1) angeordnetes Führungsteil (18) und einen mit diesem in Eingriff bringbaren Riegel (20) umfaßt.

3. Halterung nach Anspruch 2,
**gekennzeichnet durch** mit dem Gehäuse (1) verbundene Befestigungselemente (24, 24'), mit denen das Führungsteil (18) und/oder der Riegel (20) in Eingriff bringbar sind.

4. Halterung nach Anspruch 2 oder 3,
**dadurch gekennzeichnet, daß** der Riegel (20) eine Anzahl von Befestigungsnasen (46) aufweist, und daß das Führungsteil (18) Ausklinkungen (44) zur Aufnahme der Befestigungsnasen (46) aufweist.

5. Halterung nach einem der Ansprüche 2 bis 4,
**dadurch gekennzeichnet, daß** zur Aufnahme von Strukturelementen (32, 32') der Schalldämpferkulissen (2, 2') am Führungsteil (18) und/oder am Riegel (20) Aussparungen (34, 34') vorgesehen sind.

6. Halterung nach einem der Ansprüche 3 bis 5,
**dadurch gekennzeichnet, daß** das Führungsteil (18) und der Riegel (20) als U-Profil ausgebildet sind.

## Claims

1. Mounting for silencers of a gas turbine in a housing (1), a latch mechanism (14) being provided for fixing the silencers (2, 2').

2. Mounting according to Claim 1, **characterized in that** the latch mechanism (14) comprises a guide part (18) arranged fixedly in the housing (1) and a latch (20) capable of being brought into engagement with the said guide part.

3. Mounting according to Claim 2, **characterized by** fastening elements (24, 24') which are connected to the housing (1) and with which the guide part (18) and/or the latch (20) can be brought into engagement.

4. Mounting according to Claim 2 or 3, **characterized in that** the latch (20) has a number of fastening noses (46), and **in that** the guide part (18) has notches (44) for receiving the fastening noses (46).

5. Mounting according to one of Claims 2 to 4, **characterized in that** recesses (34, 34') are provided on the guide part (18) and/or on the latch (20) for receiving structural elements (32, 32') of the silencers (2, 2').

6. Mounting according to one of Claims 3 to 5, **characterized in that** the guide part (18) and the latch (20) are designed as a U-profile.

## Revendications

1. Dispositif de fixation d'éléments d'isolation phonique d'une turbine à gaz dans une enveloppe (1), un mécanisme (14) de verrouillage étant prévu pour immobiliser les éléments (2, 2') d'isolation phonique.

2. Dispositif de fixation suivant la revendication 1,
**caractérisé en ce que** le mécanisme (14) de verrouillage comprend une partie (18) de guidage disposée à poste fixe dans l'enveloppe (1) et un verrou (20) pouvant être mis en prise avec cette partie.

3. Dispositif de fixation suivant la revendication 2,
**caractérisé par** des éléments (24, 24') de fixation qui sont reliés à l'enveloppe (1) et par lesquels la partie (8) de guidage et/ou le verrou (20) peuvent être mis en prise.

4. Dispositif de fixation suivant la revendication 2 ou 3,
**caractérisé en ce que** le verrou (20) comporte un certain nombre de becs (46) de fixation et **en ce que** la partie (18) de guidage comporte des encoches (44) de réception des becs (46) de fixation.

5. Dispositif de fixation suivant l'une des revendications 2 à 4,
**caractérisé en ce que** pour la réception d'éléments (32, 32') de structure des éléments (2, 2') d'isolation phonique il est prévu sur la partie (18) de guidage et/ou sur le verrou (20) des évidements (34, 34').

6. Dispositif de fixation suivant l'une des revendications 3 à 5,
**caractérisé en ce que** la partie (18) de guidage et le verrou (20) sont constitués sous la forme de profilés en U.
